# EUROPÄISCHE PATENTSCHRIFT

(11) **EP 3 953 574 B1**
(45) Veröffentlichungstag und Bekanntmachung des Hinweises auf die Patenterteilung: **01.05.2024**
(21) Anmeldenummer: 20712290.4
(22) Anmeldetag: 16.03.2020
(51) Int. Cl.: F02D 19/02, F02B 19/10, F02D 41/00, F02D 41/40, F02M 21/02

(54) **VERFAHREN ZUM BETREIBEN EINER BRENNKRAFTMASCHINE**
METHOD FOR OPERATING AN INTERNAL COMBUSTION ENGINE
PROCÉDÉ POUR FAIRE FONCTIONNER UN MOTEUR À COMBUSTION INTERNE

(30) Priorität: 11.04.2019 DE 102019109603
(43) Veröffentlichungstag der Anmeldung: 16.02.2022
(73) Patentinhaber: MAN Truck & Bus SE, 80995 München (DE)
(72) Erfinder: BARCIELA DÍAZ-BLANCO, Bruno, 80995 München (DE); MALISCHEWSKI, Thomas, 80995 München (DE); HIRSCHMANN, Steffen, 80995 München (DE); HYNA, Dominic, 80995 München (DE); ZÜLOW, Daniel, 80995 München (DE)
(74) Vertreter: v. Bezold & Partner Patentanwälte - PartG mbB
(86) Internationale Anmeldenummer: PCT/EP2020/057105
(87) Internationale Veröffentlichungsnummer: WO 2020/207712

(56) Entgegenhaltungen:
- EP-A1- 3 043 049
- WO-A1-2018/141589
- AT-U1- 6 290
- DE-A1-102014 005 984
- JP-A- 2018 066 369

## Beschreibung

Die Erfindung betrifft ein Verfahren zum Betreiben einer Brennkraftmaschine, vorzugsweise einer Einkraftstoff-Brennkraftmaschine, mit einem Gaskraftstoff. Die Erfindung betrifft ferner eine Brennkraftmaschine und eine Kraftfahrzeug mit einer Brennkraftmaschine.

Zum Betreiben einer Gaskraftstoff-Brennkraftmaschine kann das sogenannte HPDI-Verfahren (High Pressure Direct Injection) verwendet werden. Bei diesem Brennverfahren werden Methan als Gaskraftstoff und Diesel als Flüssigkraftstoff benötigt. Hierbei werden das Methan und der Diesel getrennt in einem Injektor geführt. Zuerst wird eine Pilotmasse von ca. 3 mg bis 10 mg Diesel im Bereich des oberen Totpunktes eingespritzt. Aufgrund der Eigenschaften des Diesels (geringe Zündtemperaturen) findet eine sofortige Verbrennung statt. Hierdurch erfolgt eine lokale, deutliche Temperaturerhöhung. Im zweiten Schritt wird dann die Hauptmenge an Methan eingespritzt. Durch die vorherige Temperaturerhöhung findet auch eine sofortige Verbrennung des Methans statt.

Nachteilig an diesem Verfahren kann der weiterhin benötigte Dieselkraftstoff sein, durch den die Systemkomplexität deutlich ansteigt und nicht das volle CO2 Einsparpotential gehoben werden kann.

Aus der DE 10 2014 005 984 A1 ist ein Verfahren zum Betrieb einer Brennkraftmaschine mit mindestens einer Hauptbrennkammer bekannt. Bei dem Verfahren entflammt sich ein in die mindestens eine Hauptbrennkammer eingebrachter Brennstoff an einer Flammsäule, so dass der Brennstoff in einer Diffusionsverbrennung verbrennt, wobei die Flammsäule mittels durch eine Zündeinrichtung gezündetem Zündstoff erzeugt wird und wobei der Zündstoff und der Brennstoff von einem gleichen Brennstofftyp sind.

Die JP 2018 066 369 A offenbart einen Viertakt-Gasmotor, umfassend eine Hauptkammer, eine Nebenkammer, die von der Hauptkammer durch ein Abschottungselement getrennt ist und ein kleineres Fassungsvermögen als die Hauptkammer hat, Verbindungslöcher, die an dem Abschottungselement installiert sind und die Hauptkammer und die Nebenkammer verbinden, einen Injektor, der gasförmigen Kraftstoff in die Nebenkammer einspritzt, und eine Zündkerze, die in der Nebenkammer angeordnet ist. Der Injektor führt dabei eine Haupteinspritzung in einem Ansaughub aus, um Mischgas mit einem Äquivalenzverhältnis von nicht weniger als 0,5 und nicht mehr als 2,0 zum Zündzeitpunkt in der Hauptkammer zu bilden.

Ferner führt der Injektor unmittelbar vor dem Zündzeitpunkt eine Untereinspritzung mit einer Gaskraftstoffmenge aus, die kleiner ist als die der Haupteinspritzung, um das Mischgas mit einem Äquivalenzverhältnis von nicht weniger als 1,0 und nicht mehr als 2,0 zum Zündzeitpunkt in der Unterkammer zu bilden. Die Gesamtöffnungsfläche der Verbindungslöcher in der Unterkammer und das Fassungsvermögen der Unterkammer werden so bestimmt, dass die Geschwindigkeit des nach einer Zündung durch die Verbindungslöcher in die Hauptkammer eingespritzten Gases in einem Bereich von mindestens 4 m/s und höchstens 7 m/s liegt.

Der Erfindung liegt die Aufgabe zu Grunde, eine alternative und/oder verbesserte Technik zum Betreiben einer Brennkraftmaschine mit einem Gaskraftstoff zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft ein Verfahren zum Betreiben einer Brennkraftmaschine, vorzugsweise einer Einkraftstoff-Brennkraftmaschine. Das Verfahren weist ein Verdichten von zugeführter Luft in einer Hauptbrennkammer und einer Vorkammer (Vorbrennkammer) der Brennkraftmaschine mittels Bewegung eines Kolbens in der Hauptbrennkammer zu einem oberen Totpunkt einer Kolbenbewegung des Kolbens auf. Das Verfahren weist ein Zuführen einer Pilotmenge von Gaskraftstoff (gasförmigen Kraftstoff), vorzugsweise Methan (Erdgas), in die Vorkammer, bevor der Kolben den oberen Totpunkt erreicht, auf. Das Verfahren weist ein Selbstzünden der Pilotmenge von Gaskraftstoff in der Vorkammer auf. Das Verfahren weist ein Zuführen einer Hauptmenge von Gaskraftstoff in die Vorkammer nach dem Selbstzünden. Und ein Zünden der Hauptmenge von Gaskraftstoff durch die von der selbstgezündeten Pilotmenge bewirkten Bedingungen in der Vorkammer auf.

Die Erfindung ermöglicht es, eine Brennkraftmaschine rein mit Methan oder einem anderen gasförmigen Kraftstoff zu betreiben, und zwar mittels Kompressionsselbstzündung der Pilotmenge. Es wird kein Dieselkraftstoff o.Ä. wie beim HPDI-Verfahren zum Zünden des Gaskraftstoffs benötigt. Die Selbstzündung der Pilotmenge führt zu einer Temperaturerhöhung und Druckerhöhung in der Vorkammer. Dadurch kann die danach zugeführte Hauptmenge von Gaskraftstoff gezündet werden. Die Hauptverbrennung selbst kann einem Dieselbrennverfahren entsprechen oder ähnlich dazu sein.

Zweckmäßig kann die Hauptmenge zeitlich nach und beabstandet zu der Pilotmenge zugeführt werden.

In einem Ausführungsbeispiel erfolgt das Verdichten mit einem Verdichtungsverhältnis von größer oder gleich ca. 20, 21, 22 oder 23. Es wurde herausgefunden, dass sich beim gegebenen System mit Vorkammer und Hauptbrennkammer bei einem Verdichtungsverhältnis von ca. 23 relativ sicher eine Zündtemperatur von Methan in der Vorkammer erreichen lässt, und zwar deutlich bevor der Kolben im Verdichtungstakt den oberen Totpunkt erreicht und für alle Lastsituationen der Brennkraftmaschine.

In einem weiteren Ausführungsbeispiel ergibt sich die Pilotmenge aus einer Pilotmasse von Gaskraftstoff zwischen ca. 0,5 mg und ca. 3 mg, vorzugsweise zwischen ca. 0,5 mg und ca. 2 mg. Es wurde herausgefunden, dass diese Kleinstmenge von Gaskraftstoff ausreichend sein kann, um eine sichere Selbstzündung der Pilotmenge zu gewährleisten.

In einem weiteren Ausführungsbeispiel ist die Pilotmenge so gewählt ist, dass sich ein Verbrennungsluftverhältnis zwischen ca. 0,5 und ca. 1,6 in der Vorkammer einstellt. Damit kann in der Vorkammer ein brennbares Gemisch vorliegen, das selbst zünden kann.

In einer Ausführungsform wird das Zuführen der Pilotmenge für eine Zeitdauer zwischen ca. 50 µs und ca. 200 µs ausgeführt. Es wurde herausgefunden, dass bereits dieser kurze Zeitraum zum Zuführen der kleinen Pilotmenge ausreichen kann. Das kurze Zeitfenster ermöglicht eine besonders genaue Erreichung eines gewünschten Zündzeitpunkts.

In einer weiteren Ausführungsform wird das Zuführen der Pilotmenge in einem Bereich zwischen ca. 40°KW (Kurbelwinkel) vor dem oberen Totpunkt und ca. 10°KW vor dem oberen Totpunkt ausgeführt. Es wurde herausgefunden, dass dieser Kurbelwinkelbereich besonders geeignet ist. Einerseits kann eine gute Durchmischung zwischen der Pilotmenge und der verdichteten Luft erfolgen. Andererseits erfolgt die Selbstzündung und die daran anschließende exotherme Reaktion zu einem Zeitpunkt vor der Zuführung der Hauptmenge. Zum Zeitpunkt der Zuführung der Hauptmenge liegen daher bereits Bedingungen in der Vorkammer vor, die zum Zünden der Hauptmenge genügen.

In einer Ausführungsvariante wird das Zuführen der Hauptmenge in einem Bereich zwischen ca. 10°KW vor dem oberen Totpunkt und ca. 25°KW nach dem oberen Totpunkt ausgeführt. So kann eine dem Dieselverfahren angenäherte oder ähnliche Verbrennung des Gaskraftstoffs im Expansionstakt stattfinden.

In einer weiteren Ausführungsvariante erfolgt das Zuführen der Pilotmenge und/oder das Zuführen der Hauptmenge mit einem Zuführdruck in einem Bereich zwischen ca. 200 bar und ca. 600 bar. Damit kann eine sichere und schnelle Zuführung des Gaskraftstoffs auch bei sehr hohen Verdichtungsenddrücken, z. B. bewirkt durch das vergleichsweise hohe Verdichtungsverhältnis, erreicht werden.

Zweckmäßig werden die Pilotmenge und/oder die Hauptmenge direkt in die Vorkammer zugeführt, vorzugsweise eingeblasen.

In einem Ausführungsbeispiel erfolgt das Zuführen der Pilotmenge und/oder das Zuführen der Hauptmenge durch einen Piezo-Kraftstoffinjektor. Im Vergleich zum eingangs genannten HPDI-Brennverfahren liegt durch den Entfall des Dieselkraftstoffs kein Medium zum Steuern eines konventionellen Magnetinjektors vor. Prinzipiell wäre es zwar auch möglich, einen Magnetventilaktuator mit verdichtetem Gaskraftstoff zu betreiben, jedoch können sich dabei sehr hohe Leckage und Absteuermengen ergeben. Daher wird vorgeschlagen, einen Piezo-Kraftstoffinjektor zu verwenden. Hierbei kann die Nadelbewegung bspw. nur über ein Piezoelement des Piezo-Kraftstoffinjektors gesteuert werden und es treten keine Absteuerverluste an Gaskraftstoff auf. Ein weiterer Vorteil des Piezo-Kraftstoffinjektors kann die Möglichkeit der Kleinstmengenregelung sein. Der Piezo-Kraftstoffinjektor kann ermöglichen, sehr kurze Zufuhrdauern von bspw. 50 µs bis 200 µs und damit auch sehr kleine Zufuhrmengen von bspw. 0,5 mg bis 3 mg sehr stabil darzustellen.

In einem anderen Ausführungsbeispiel erfolgt das Zuführen der Pilotmenge und/oder das Zuführen der Hauptmenge durch einen mittels eines Elektromagnets betätigten Kraftstoffinjektor.

In einem weiteren Ausführungsbeispiel weist das Verfahren ferner ein Anpassen der Pilotmenge und/oder ein Anpassen eines Zuführzeitpunkts der Pilotmenge in Abhängigkeit von einem Ladedruck der zugeführten Luft auf. Die Pilotmenge kann bspw. so angepasst werden, dass sich ein Verbrennungsluftverhältnis λ zwischen ca. 0,5 und ca. 1,6 in der Vorkammer einstellt. Die Pilotmenge kann bspw. bei hoher Last oder hohem Ladedruck vorgezogen werden.

In einer Ausführungsform weist eine Innenseitenfläche der Vorkammer einen thermischen Isolator auf, vorzugsweise in Form einer thermisch isolierenden Beschichtung. Der thermische Isolator kann einen Wärmeübergang zwischen der Vorkammer und dem Gaskraftstoff minimieren.

In einer weiteren Ausführungsform wird der Schritt des Selbstzündens der Pilotmenge von Gaskraftstoff in der Vorkammer während eines Normalbetriebs der Brennkraftmaschine (zum Beispiel im Leerlauf, unter Teillast und/oder unter Volllast) durchgeführt. Zweckmäßig wird im Normalbetrieb keine Zündkerze oder Glühkerze zum Zünden oder Unterstützen eines Zündens der Pilotmenge verwendet.

In einer Ausführungsvariante weist das Verfahren ferner ein Fremdzünden der Pilotmenge in der Vorkammer durch eine Zündkerze bei einem Kaltstart der Brennkraftmaschine auf. Alternativ kann das Verfahren bspw. ein Vorheizen der Vorkammer durch eine Glühkerze und Selbstzünden der Pilotmenge von Gaskraftstoff in der vorgeheizten Vorkammer vorzugsweise bei einem Kaltstart der Brennkraftmaschine aufweisen. So kann auch unter Kaltstartbedingungen eine sichere Zündung des Gaskraftstoffs gewährleistet werden.

In einer weiteren Ausführungsvariante erfolgt das Zuführen der Pilotmenge und/oder das Zuführen der Hauptmenge gasförmig und/oder durch denselben Kraftstoffinjektor, zweckmäßig über die gleiche Leitung des Kraftstoffinjektors.

In einem Ausführungsbeispiel weist die Vorkammer ein Volumen in einem Bereich zwischen ca. 0,5 cm³ und ca. 2 cm³ auf. Ein derartig geringes Volumen kann ausreichend sein, um die sehr geringe Pilotmenge von Gaskraftstoff zusammen mit der verdichteten Luft sicher zum Selbstzünden zu bringen.

In einem weiteren Ausführungsbeispiel ist die Vorkammer durch mehrere Durchgangsöffnungen, vorzugweise 6 bis 14 verteilt angeordnete Durchgangsöffnungen, mit der Hauptbrennkammer verbunden.

In einem weiteren Ausführungsbeispiel ist die Vorkammer in einem Kraftstoffinjektor für die Pilotmenge und/oder die Hauptmenge integriert oder die Vorkammer ist separat zu einem Kraftstoffinjektor für die Pilotmenge und/oder die Hauptmenge ausgebildet.

Die Erfindung betrifft auch eine Brennkraftmaschine, die zum Ausführen eines Verfahrens wie hierin offenbart ausgeführt ist.

Die Erfindung betrifft auch ein Kraftfahrzeug, vorzugsweise ein Nutzfahrzeug (zum Beispiel Lastkraftwagen oder Omnibus), mit einer Brennkraftmaschine, die zum Ausführen eines Verfahrens wie hierin offenbart ausgeführt ist.

Zweckmäßig kann die Brennkraftmaschine eine vorzugsweise elektronische Steuereinheit aufweisen, die zum Ausführen des Verfahrens eingerichtet ist.

Vorzugsweise kann sich der Begriff "Steuereinheit" auf eine Elektronik (z. B. mit Mikroprozessor(en) und Datenspeicher) beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Es ist auch möglich, das Verfahren und die Vorrichtung wie hierin offenbart für Personenkraftwagen, Großmotoren, geländegängige Fahrzeuge, stationäre Motoren, Marinemotoren usw. zu verwenden.

Weitere Einzelheiten und Vorteile der Erfindung werden im Folgenden unter Bezug auf die beigefügten Zeichnungen beschrieben. Es zeigen:
- Figur 1: eine schematische Darstellung einer Brennkraftmaschine gemäß einem Ausführungsbeispiel der vorliegenden Offenbarung; und
- Figur 2: eine Schnittansicht durch einen beispielhaften Zylinderkopf;
- Figur 3: ein Kurbelwinkel-Temperaturdiagramm für einen Leerlauf und zwei unterschiedliche Verdichtungsverhältnisse; und
- Figur 4: ein Kurbelwinkel-Temperaturdiagramm für eine Volllast und zwei unterschiedliche Verdichtungsverhältnisse.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

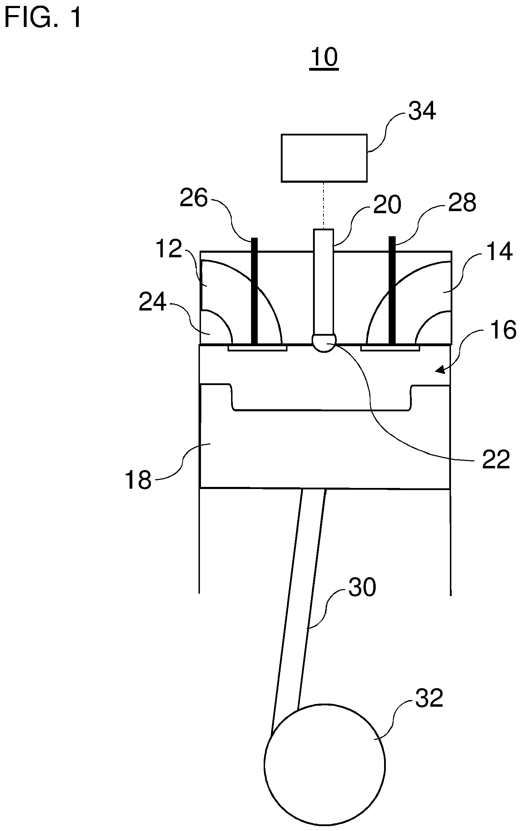

Die Figur 1 zeigt eine Brennkraftmaschine 10. Die Brennkraftmaschine 10 ist als eine Hubkolben-Brennkraftmaschine ausgeführt. Zweckmäßig ist die Brennkraftmaschine 10 als eine Viertakt-Brennkraftmaschine ausgeführt. Die Brennkraftmaschine 10 weist einen oder mehrere Zylinder auf. Zur Verbesserung der Übersichtlichkeit ist lediglich ein Zylinder in Figur 1 dargestellt. Die Brennkraftmaschine 10 ist besonders bevorzugt als eine Einkraftstoff-Brennkraftmaschine zum Betreiben mittels Methan (Erdgas) als einzigen Kraftstoff ausgeführt. Die Brennkraftmaschine 10 kann allerdings bspw. auch mit einem anderen gasförmigen Kraftstoff betrieben werden, z. B. Wasserstoff.

Die Brennkraftmaschine 10 kann in einem Fahrzeug, z. B. einem Kraftfahrzeug, einem Schienenfahrzeug oder einem Wasserfahrzeug, zum Antreiben des Fahrzeugs umfasst sein. Vorzugsweise ist die Brennkraftmaschine 10 in einem Nutzfahrzeug, z. B. einem Lastkraftwagen oder Omnibus, zum Antreiben des Nutzfahrzeugs umfasst. Es ist auch möglich, die Brennkraftmaschine 10 in einer stationären Anlage z. B. zum Antreiben eines Generators zu verwenden.

Die Brennkraftmaschine 10 weist je Zylinder mindestens einen Lufteinlasskanal 12, mindestens einen Abgasauslasskanal 14, eine Hauptbrennkammer 16, einen Kolben 18, einen Kraftstoffinjektor 20, eine Vorkammer (Vorbrennkammer) 22 und einen Zylinderkopf 24 auf.

Der Lufteinlasskanal 12 mündet in die Hauptbrennkammer 16. Über den Lufteinlasskanal 12 kann (Lade-)Luft zu der Hauptbrennkammer 16 zugeführt werden. Der Lufteinlasskanal 12 ist in dem Zylinderkopf 24 angeordnet. Der Zylinderkopf 24 begrenzt die Hauptbrennkammer 16 von oben. Stromaufwärts des Lufteinlasskanals 12 kann ein Luftzuführsystem angeordnet sein. Das Luftzuführsystem kann je nach Anforderung bspw. einen oder mehrere Verdichter einer Turboladerbaugruppe, einen Ladeluftkühler und/oder eine Abgasrückrührleitung aufweisen.

Eine Mündungsöffnung des Lufteinlasskanals 12 in die Hauptbrennkammer 16 ist mittels eines Lufteinlassventils 26 zu öffnen und zu schließen. Das Lufteinlassventil 26 ist vorzugsweise als ein Tellerventil ausgeführt. Das Lufteinlassventil 26 kann mittels jeglicher Technik betätigt werden, z. B mittels eines zweckmäßig variablen Ventiltriebs.

Nach der Verbrennung verlässt das Abgas die Hauptbrennkammer 16 durch den mittels eines Abgasauslassventils 28 geöffneten Abgasauslasskanal 14. Das Abgasauslassventil 28 kann bspw. als ein Tellerventil ausgeführt sein. Der Abgasauslasskanal 14 ist in dem Zylinderkopf 24 angeordnet. Stromabwärts des Abgasauslasskanals 14 kann ein Abgassystem angeordnet sein. Das Abgassystem kann bspw. eine oder mehrere Abgasturbinen einer Turboladerbaugruppe und/oder mindestens eine Abgasnachbehandlungsvorrichtung aufweisen.

Der Kolben 18 ist hin- und her bewegbar in dem Zylinder angeordnet. Der Kolben 18 ist über einen Pleuel 30 mit einer Kurbelwelle 32 verbunden. Der Kolben 18 begrenzt die Hauptbrennkammer 16 nach unten. Der Kolben 18 kann Luft in der Hauptbrennkammer 16 bei seiner Bewegung vom unteren Totpunkt zum oberen Totpunkt verdichten. Das Verdichtungsverhältnis ε kann hierbei vergleichsweise hoch sein. Das Verdichtungsverhältnis ε kann bspw. 23 oder größer sein.

Der Kraftstoffinjektor 20 ist als ein Gaskraftstoff-Injektor, vorzugsweise ein Methan-Injektor, ausgebildet. Der Kraftstoffinjektor 20 ist als ein Einkraftstoff-Injektor zum Führen eines einzigen Kraftstoffs ausgebildet. Der Kraftstoffinjektor 20 ist so angeordnet oder ausgeführt, dass Gaskraftstoff in die Vorkammer 22 zugeführt wird. Vorzugsweise bläst der Kraftstoffinjektor 20 den Gaskraftstoff gasförmig in die Vorkammer 22 ein. Der Kraftstoffinjektor 20 ist zweckmäßig zentral bezüglich der Hauptbrennkammer 16 angeordnet.

Die Zuführung durch den Kraftstoffinjektor 20 erfolgt zweckmäßig mit einem hohen Druck, zum Beispiel in einem Bereich zwischen 200 bar und 600 bar. Bspw. kann der Kraftstoffinjektor 20 mit einem Gaskraftstoff-Common-Rail fluidisch verbunden sein. Das Gaskraftstoff-Common-Rail kann Gaskraftstoff zu dem Kraftstoffinjektor 20 zuführen.

Der Kraftstoffinjektor 20 ist dazu ausgebildet eine Pilotmenge und eine Hauptmenge von Gaskraftstoff zu unterschiedlichen Zeitpunkten in die Vorkammer 22 zuzuführen. Der Kraftstoffinjektor 20 kann auf jegliche Art und Weise betätigt sein. Um auch ein Zuführen von Kleinstmengen von Gaskraftstoff zu ermöglichen, ist der Kraftstoffinjektor 20 vorzugsweise ein Piezo-Kraftstoffinjektor, der mittels eines Piezoelements betätigbar ist. Z. B. kann sich eine Verschlussnadel des Kraftstoffinjektors 20 in Abhängigkeit von einem Zustand eines Piezoelements bzw. Piezokristalls des Kraftstoffinjektors 20 heben oder senken. Es ist bspw. auch möglich, dass der Kraftstoffinjektor 20 mittels eines Elektromagneten betätigbar ist. Zweckmäßig ist eine Betätigung des Kraftstoffinjektors 20 durch eine elektronische Steuereinheit 34 gesteuert.

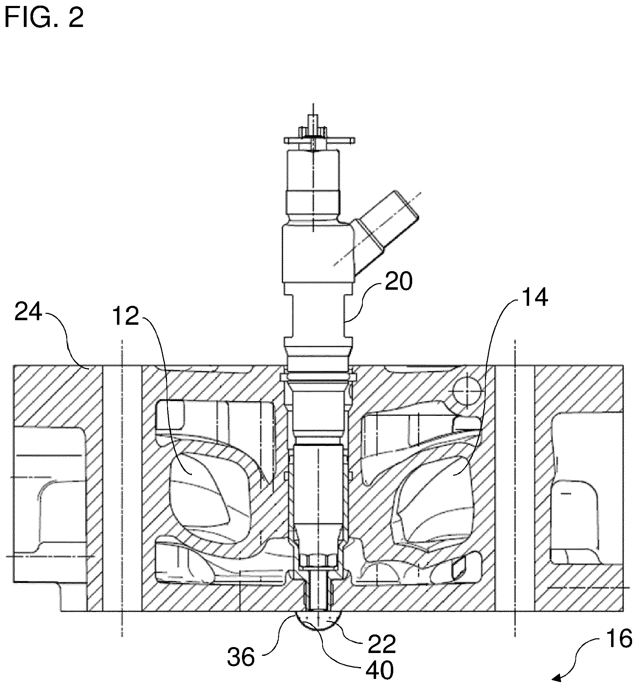

Die Vorkammer 22 kann in dem Kraftstoffinjektor 20 integriert sein, wie in Figur 1 angedeutet ist. Es ist allerdings auch möglich, die Vorkammer 22 separat zu dem Kraftstoffinjektor 20 auszubilden, wie in Figur 2 dargestellt ist. Der Kraftstoffinjektor 20 kann dann bspw. direkt in die Vorkammer 22 münden. Bei getrennter Ausbildung von Vorkammer 22 und Kraftstoffinjektor 20 kann die Vorkammer z. B. zumindest teilweise durch den Zylinderkopf 24, durch ein an der Brennraumseite des Zylinderkopfes 24 angebrachtes Kappenelement 36 (siehe Figur 2) und/oder durch eine Montagehülse 38 (siehe Figur 2) für den Kraftstoffinjektor 20 gebildet sein. Bei Verwendung des Kappenelements 36 kann dieses bspw. von unten in die Montagehülse 38 eingeschraubt sein.

Die Vorkammer 22 kann bspw. ein kugeliges, domförmiges oder abgerundetes Innenvolumen aufweisen. Der Gaskraftstoff ist mittels des Kraftstoffinjektors 20 in das Innenvolumen zuführbar. Das Innenvolumen kann zweckmäßig in einem Bereich zwischen 0,5 cm³ und 2,5 cm³ liegen.

Die Vorkammer 22 ist über mehrere Durchgangsöffnungen mit der Hauptbrennkammer 16 in Fluidverbindung. Die Durchgangsöffnungen sind zweckmäßig symmetrisch verteilt um einen Umfang der Vorkammer 22 verteilt angeordnet. Bspw. sind sechs bis vierzehn Durchgangsöffnungen umfasst.

Es ist möglich, dass eine Innenseitenfläche der Vorkammer 22 einen thermischen Isolator 40 aufweist. Der thermische Isolator 40 kann zweckmäßig als eine Beschichtung der Innenseitenfläche ausgeführt sein. Bspw. kann der thermische Isolator 40 aus einem keramischen Material bestehen. Es ist möglich, dass der thermische Isolator 40 bspw. auf die Innenseitenfläche aufgedampft ist, mittels Plasmaauftragen auf die Innenseitenfläche aufgetragen ist oder mittels eines Spritzverfahrens auf die Innenseitenfläche aufgespritzt ist. Der thermische Isolator 40 kann ein Kühlen von Gaskraftstoff in der Vorkammer 22 durch Wände der Vorkammer 22 verhindern oder zumindest verringern.

In einem Einlasstakt wird Luft durch den Lufteinlasskanal 12 und das geöffnete Lufteinlassventil 26 in die Hauptbrennkammer 16 zugeführt. Der Kolben 18 bewegt sich vom oberen Totpunkt zum unteren Totpunkt. Im Verdichtungstakt wird die zugeführte Luft in der Hauptbrennkammer 16 mit einem hohen Verdichtungsverhältnis (z. B. ε ≥ 23) verdichtet. Die Luft wird dabei auch in der Vorkammer 22 verdichtet. Der Kolben 18 bewegt sich vom unteren Totpunkt zum oberen Totpunkt. Während des Verdichtungstaktes wird die Luft in die Vorkammer 22 durch den Kolben 18 aufgrund der Kompression gedrückt. Im Verdichtungstakt steigen ein Druck und eine Temperatur in der Vorkammer 22 an.

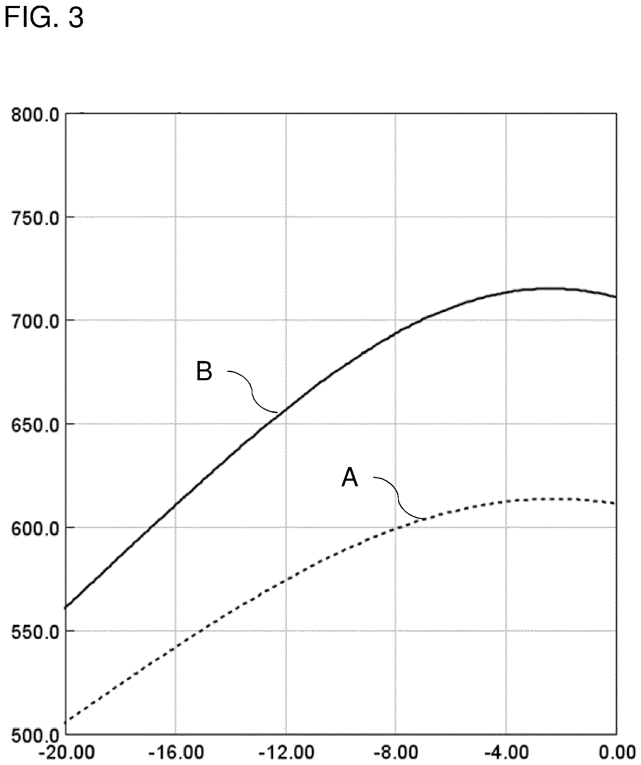

Die Figur 3 zeigt ein beispielhaftes Kurbelwinkel-Temperatur-Diagramm für die Vorkammer 22 für zwei unterschiedliche Verdichtungsverhältnisse ε im Leerlauf der Brennkraftmaschine 10. Der Kurbelwinkel der Kurbelwelle 32 ist auf der Abszisse dargestellt. Die Temperatur in der Vorkammer 22 ist auf der Ordinate dargestellt.

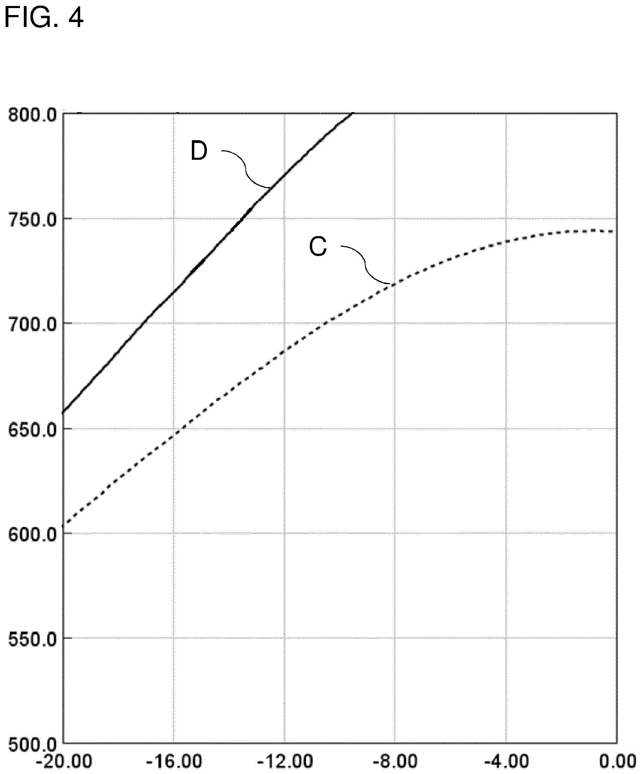

Eine erste Temperaturkurve A (gestrichelte Kurve in Figur 3) ergibt sich bei einem Verdichtungsverhältnis von ε = 16. Eine zweite Temperaturkurve B (durchgezogene Kurve in Figur 4) ergibt sich bei einem Verdichtungsverhältnis von ε = 23. Es ist ersichtlich, dass die Verdichtungsendtemperatur mit höherem Verdichtungsverhältnis ansteigt. Ferner ist ersichtlich, dass bei einem Verdichtungsverhältnis von ε = 23 eine Zündtemperatur von Methan (ca. 640°C) selbst im Leerlauf deutlich vor dem oberen Totpunkt (0° KW) erreicht wird. Bei einem Verdichtungsverhältnis von ε = 23 können also Selbstzündungsbedingungen für Methan in der Vorkammer 22 erzeugt werden, bevor der Kolben 18 den oberen Totpunkt erreicht.

Die Figur 4 zeigt ein beispielhaftes Kurbelwinkel-Temperatur-Diagramm für die Vorkammer 22 für zwei unterschiedliche Verdichtungsverhältnisse ε unter Volllast der Brennkraftmaschine 10. Der Kurbelwinkel der Kurbelwelle 32 ist wiederum auf der Abszisse dargestellt. Die Temperatur in der Vorkammer 22 ist wiederum auf der Ordinate dargestellt.

Eine erste Temperaturkurve C (gestrichelte Kurve in Figur 4) ergibt sich bei einem Verdichtungsverhältnis von ε = 16. Eine zweite Temperaturkurve D (durchgezogene Kurve in Figur 4) ergibt sich bei einem Verdichtungsverhältnis von ε = 23. Es ist ersichtlich, dass die Verdichtungsendtemperatur mit höherem Verdichtungsverhältnis ansteigt. Ferner ist ersichtlich, dass gegenüber dem Leerlauf (siehe Figur 3) die Zündtemperatur von Methan beim hohen Verdichtungsverhältnis von ε = 23 noch früher erreicht werden kann.

Gegen Ende des Verdichtungstaktes wird eine Pilotmenge von Gaskraftstoff von dem Kraftstoffinjektor 20 in die Vorkammer 22 mit hohem Druck zugeführt, vorzugsweise eingeblasen. Die Pilotmenge wird in einem Bereich zwischen 40°KW vor dem oberen Totpunkt und 10°KW vor dem oberen Totpunkt zugeführt. Das vergleichsweise frühe Einblasen der Pilotmenge ermöglicht eine gute Durchmischung von Gaskraftstoff und einströmender Luft in der Vorkammer 22. Die Pilotmenge ist sehr gering. Z. B. wird lediglich 0,5 mg bis 3 mg Gaskraftstoff als Pilotmenge in die Vorkammer eingeblasen. Die Zuführzeitdauer für die Pilotmenge ist dabei sehr gering, z. B. nur 50 µs bis 200 µs. Die Pilotmenge ist so gewählt, dass sich ein brennbares Gaskraftstoff-Luft-Gemisch in der Vorkammer 22 bildet, z. B. mit einem Verbrennungsluftverhältnis von λ = 0,6 bis 1,6.

Aufgrund der in der Vorkammer 22 herrschenden hohen Temperatur (siehe Figuren 3 und 4) zündet das Gaskraftstoff-Luft-Gemisch selbst. Nach dem Erreichen der Zündtemperatur des Gaskraftstoffs findet in der Vorkammer 22 eine exotherme Verbrennungsreaktion statt. Der Druck und die Temperatur in der Vorkammer 22 steigen. Heißes Gas wird aus der Vorkammer 22 durch die Durchgangsöffnungen in die Hauptbrennkammer 16 gedrückt.

Es folgt eine Zuführung einer Hauptmenge von Gaskraftstoff in die Vorkammer 22 durch den Kraftstoffinjektor 20. Die Hauptmenge des Gaskraftstoffs wird bspw. in einem Bereich zwischen 10°KW vor dem oberen Totpunkt und 25°KW nach dem oberen Totpunkt in die Vorkammer 22 zugeführt. Der Gaskraftstoff kann kontinuierlich über einen Kurbelwinkelbereich von rund 25°KW zugeführt werden. Der Gaskraftstoff der Hauptmenge entzündet sich an dem hei-βen Gas in und um die Vorkammer 22. Es erfolgt eine dem HPDI-Verfahren- und Dieselprinzipähnliche Verbrennung in der Hauptbrennkammer 16 im Arbeitstakt bzw. Expansionstakt der Brennkraftmaschine 10.

Es ist möglich, dass unter Kaltstartbedingungen der Brennkraftmaschine 10 eine unterstützte Selbst- oder Fremdzündung des Gaskraftstoffs bewirkt wird. Die Selbstzündung der Pilotmenge kann bspw. durch eine Glühkerze, die in die Vorkammer 22 ragt, unterstützt werden. Es kann auch eine Fremdzündung durch eine Zündkerze, die in die Vorkammer ragt, bewirkt werden. Die Glühkerze oder Zündkerze wird vorzugsweise nur unter Kaltstartbedingungen der Brennkraftmaschine 10 verwendet.

Es ist auch möglich, dass die Pilotmenge von Gaskraftstoff mengenmäßig anpassbar ist in Abhängigkeit von dem Ladedruck. So kann bspw. bei einem hohen Ladedruck eine größere Pilotmenge zugeführt werden als bei einem niedrigen Ladedruck. Die Pilotmenge kann bspw. so angepasst werden oder festgelegt sein, dass sich ein Verbrennungsluftverhältnis λ zwischen ca. 0,5 und ca. 1,6 in der Vorkammer 22 einstellt.

### Bezugszeichenliste

- 10: Brennkraftmaschine
- 12: Lufteinlasskanal
- 14: Abgasauslasskanal
- 16: Hauptbrennkammer
- 18: Kolben
- 20: Kraftstoffinjektor
- 22: Vorkammer (Vorbrennkammer)
- 24: Zylinderkopf
- 26: Lufteinlassventil
- 28: Abgasauslassventil
- 30: Pleuel
- 32: Kurbelwelle
- 34: Steuereinheit
- 36: Kappenelement
- 38: Montagehülse
- 40: Thermischer Isolator
- A-D: Temperaturkurven

## Patentansprüche

1. Verfahren zum Betreiben einer Brennkraftmaschine (10), vorzugsweise einer Einkraftstoff-Brennkraftmaschine, aufweisend:
Verdichten von zugeführter Luft in einer Hauptbrennkammer (16) und einer Vorkammer (22) der Brennkraftmaschine (10) mittels Bewegung eines Kolbens (18) in der Hauptbrennkammer (16) zu einem oberen Totpunkt einer Kolbenbewegung des Kolbens (18);
Zuführen einer Pilotmenge von Gaskraftstoff, vorzugsweise Methan, in die Vorkammer (22), bevor der Kolben (18) den oberen Totpunkt erreicht;
Selbstzünden der Pilotmenge von Gaskraftstoff in der Vorkammer (22);
Zuführen einer Hauptmenge von Gaskraftstoff in die Vorkammer (22) nach dem Selbstzünden; und
Zünden der Hauptmenge von Gaskraftstoff durch die von der selbstgezündeten Pilotmenge bewirkten Bedingungen in der Vorkammer (22).

2. Verfahren nach Anspruch 1, wobei:
das Verdichten mit einem Verdichtungsverhältnis von größer oder gleich 20, 21, 22 oder 23 erfolgt.

3. Verfahren nach Anspruch 1 oder Anspruch 2, wobei:
sich die Pilotmenge aus einer Pilotmasse von Gaskraftstoff zwischen 0,5 mg und 3 mg, vorzugsweise zwischen 0,5 mg und 2 mg, ergibt.

4. Verfahren nach einem der vorherigen Ansprüche, wobei:
die Pilotmenge so gewählt ist, dass sich ein Verbrennungsluftverhältnis zwischen 0,5 und 1,6 in der Vorkammer einstellt.

5. Verfahren nach einem der vorherigen Ansprüche, wobei:
das Zuführen der Pilotmenge für eine Zeitdauer zwischen 50 µs und 200 µs ausgeführt wird.

6. Verfahren nach einem der vorherigen Ansprüche, wobei:
das Zuführen der Pilotmenge in einem Bereich zwischen 40°KW vor dem oberen Totpunkt und 10°KW vor dem oberen Totpunkt ausgeführt wird.

7. Verfahren nach einem der vorherigen Ansprüche, wobei:
das Zuführen der Hauptmenge in einem Bereich zwischen 10°KW vor dem oberen Totpunkt und 25°KW nach dem oberen Totpunkt ausgeführt wird.

8. Verfahren nach einem der vorherigen Ansprüche, wobei::
das Zuführen der Pilotmenge und/oder das Zuführen der Hauptmenge mit einem Zuführdruck in einem Bereich zwischen 200 bar und 600 bar erfolgt.

9. Verfahren nach einem der vorherigen Ansprüche, wobei:
das Zuführen der Pilotmenge und/oder das Zuführen der Hauptmenge durch einen Piezo-Kraftstoffinjektor (20) erfolgt; oder
das Zuführen der Pilotmenge und/oder das Zuführen der Hauptmenge durch einen mittels eines Elektromagnets betätigten Kraftstoffinjektor (20) erfolgt.

10. Verfahren nach einem der vorherigen Ansprüche, ferner aufweisend:
Anpassen der Pilotmenge und/oder Anpassen eines Zuführzeitpunkts der Pilotmenge in Abhängigkeit von einem Ladedruck der zugeführten Luft.

11. Verfahren nach einem der vorherigen Ansprüche, wobei:
eine Innenseitenfläche der Vorkammer (22) einen thermischen Isolator (40) aufweist, vorzugsweise in Form einer thermisch isolierenden Beschichtung.

12. Verfahren nach einem der vorherigen Ansprüche, wobei:
der Schritt des Selbstzündens der Pilotmenge von Gaskraftstoff in der Vorkammer (22) während eines Normalbetriebs der Brennkraftmaschine (10) durchgeführt wird; und das Verfahren ferner aufweist:
- Fremdzünden der Pilotmenge in der Vorkammer (22) durch eine Zündkerze bei einem Kaltstart der Brennkraftmaschine (10); oder
- Vorheizen der Vorkammer (22) durch eine Glühkerze und Selbstzünden der Pilotmenge von Gaskraftstoff in der vorgeheizten Vorkammer (22) bei einem Kaltstart der Brennkraftmaschine (10).

13. Verfahren nach einem der vorherigen Ansprüche, wobei:
das Zuführen der Pilotmenge und/oder das Zuführen der Hauptmenge gasförmig erfolgt; und/oder
das Zuführen der Pilotmenge und das Zuführen der Hauptmenge durch denselben Kraftstoffinjektor (20) erfolgt.

14. Verfahren nach einem der vorherigen Ansprüche, wobei:
die Vorkammer (22) ein Volumen in einem Bereich zwischen 0,5 cm³ und 2 cm³ aufweist; und/oder
die Vorkammer (22) durch mehrere Durchgangsöffnungen, vorzugweise 6 bis 14 verteilt angeordnete Durchgangsöffnungen, mit der Hauptbrennkammer (16) verbunden ist; und/oder
die Vorkammer (22) in einem Kraftstoffinjektor (20) für die Pilotmenge und/oder die Hauptmenge integriert ist oder die Vorkammer (22) separat zu einem Kraftstoffinjektor (20) für die Pilotmenge und/oder die Hauptmenge ausgebildet ist.

## Claims

1. A method for operating an internal combustion engine (10), preferably a single-fuel internal combustion engine, comprising:
compressing supplied air in a main combustion chamber (16) and a prechamber (22) of the internal combustion engine (10) by moving a piston (18) in the main combustion chamber (16) to a top dead center position of a piston movement of the piston (18);
feeding a pilot quantity of gas fuel, preferably methane, into the prechamber (22) before the piston (18) reaches the top dead center position;
autoignition of the pilot quantity of gas fuel in the prechamber (22);
feeding a main quantity of gas fuel into the prechamber (22) after the autoignition; and
ignition of the main quantity of gas fuel by the conditions in the prechamber (22) that are brought about by the autoignited pilot quantity.

2. The method as claimed in claim 1, wherein:
compression takes place at a compression ratio greater than or equal to 20, 21, 22 or 23.

3. The method as claimed in claim 1 or claim 2, wherein:
the pilot quantity results from a pilot mass of gas fuel of between 0.5 mg and 3 mg, preferably between 0.5 mg and 2 mg.

4. The method as claimed in any of the preceding claims, wherein:
the pilot quantity is selected in such a way that a combustion air ratio of between 0.5 and 1.6 is established in the prechamber.

5. The method as claimed in any of the preceding claims, wherein:
the feeding of the pilot quantity is carried out for a period of time of between 50 µs and 200 µs.

6. The method as claimed in any of the preceding claims, wherein:
the feeding of the pilot quantity is carried out in a range between 40° of crank angle before top dead center and 10° of crank angle before top dead center.

7. The method as claimed in any of the preceding claims, wherein:
the feeding of the main quantity is carried out in a range between 10° of crank angle before top dead center and 25° of crank angle after top dead center.

8. The method as claimed in any of the preceding claims, wherein:
the feeding of the pilot quantity and/or the feeding of the main quantity take/takes place with a feed pressure in a range between 200 bar and 600 bar.

9. The method as claimed in any of the preceding claims, wherein:
the feeding of the pilot quantity and/or the feeding of the main quantity are/is performed by a piezoelectric fuel injector (20); or
the feeding of the pilot quantity and/or the feeding of the main quantity are/is performed by a fuel injector (20) actuated by means of an electromagnet.

10. The method as claimed in any of the preceding claims, further comprising:
adapting the pilot quantity and/or adapting a feed time of the pilot quantity as a function of a boost pressure of the air fed in.

11. The method as claimed in any of the preceding claims, wherein:
an inner side surface of the prechamber (22) has a thermal insulator (40), preferably in the form of a thermally insulating coating.

12. The method as claimed in any of the preceding claims, wherein:
the step of autoignition of the pilot quantity of gas fuel in the prechamber (22) is carried out during normal operation of the internal combustion engine (10); and
the method further comprises:
- applied ignition of the pilot quantity in the prechamber (22) by a spark plug in the case of a cold start of the internal combustion engine (10); or
- preheating of the prechamber (22) by means of a glow plug and autoignition of the pilot quantity of gas fuel in the preheated prechamber (22) in the case of a cold start of the internal combustion engine (10).

13. The method as claimed in any of the preceding claims, wherein:
the feeding of the pilot quantity and/or the feeding of the main quantity take/takes place in gaseous form; and/or
the feeding of the pilot quantity and the feeding of the main quantity are performed by the same fuel injector (20).

14. The method as claimed in any of the preceding claims, wherein:
the prechamber (22) has a volume in a range between 0.5 cm³ and 2 cm³; and/or
the prechamber (22) is connected to the main combustion chamber (16) by a plurality of through openings, preferably 6 to 14 distributed through openings; and/or
the prechamber (22) is integrated into a fuel injector (20) for the pilot quantity and/or the main quantity, or the prechamber (22) is formed separately from a fuel injector (20) for the pilot quantity and/or the main quantity.

## Revendications

1. Procédé pour faire fonctionner un moteur à combustion interne (10), de préférence un moteur à combustion interne à un seul carburant, comprenant :
la compression de l'air fourni dans une chambre de combustion principale (16) et une préchambre (22) du moteur à combustion interne (10) en déplaçant un piston (18) dans la chambre de combustion principale (16) jusqu'à un point mort haut du mouvement du piston (18) ; l'alimentation d'une quantité pilote de carburant gazeux, de préférence du méthane, dans la préchambre (22) avant que le piston (18) n'atteigne le point mort haut ;
l'auto-allumage de la quantité pilote de carburant gazeux dans la préchambre (22) ;
l'introduction d'une quantité principale de carburant gazeux dans la préchambre (22) après l'auto-allumage ; et
l'allumage de la quantité principale de carburant gazeux par les conditions régnant dans la préchambre (22), provoqué par la quantité pilote auto-allumée.

2. Procédé selon la revendication 1, dans lequel :
la compression est effectuée avec un taux de compression supérieur ou égal à 20, 21, 22 ou 23.

3. Procédé selon la revendication 1 ou la revendication 2, dans lequel :
la quantité pilote résulte d'une masse pilote de carburant gazeux comprise entre 0,5 mg et 3 mg, de préférence entre 0,5 mg et 2 mg.

4. Procédé selon l'une des revendications précédentes, dans lequel :
la quantité pilote est choisie de telle sorte qu'un rapport d'air de combustion compris entre 0,5 et 1,6 soit obtenu dans l'antichambre.

5. Procédé selon l'une des revendications précédentes, dans lequel :
l'alimentation en la quantité pilote est effectuée pendant une durée comprise entre 50 µs et 200 µs.

6. Procédé selon l'une des revendications précédentes, dans lequel :
l'alimentation en la quantité pilote est effectuée dans une gamme allant de 40°KW avant le point mort haut et 10°KW avant le point mort haut.

7. Procédé selon l'une des revendications précédentes, dans lequel :
l'alimentation en la quantité principale s'effectue dans une gamme allant de 10°KW avant le point mort haut et 25°KW après le point mort haut.

8. Procédé selon l'une des revendications précédentes, dans lequel :
l'alimentation en la quantité pilote et/ou l'alimentation en la quantité principale est effectuée à une pression d'alimentation comprise entre 200 bars et 600 bars.

9. Procédé selon l'une des revendications précédentes, dans lequel :
l'alimentation en la quantité pilote et/ou l'alimentation en la quantité principale est réalisée par un injecteur de carburant piézo-électrique (20) ; ou
l'alimentation de la quantité pilote et/ou l'alimentation de la quantité principale est réalisée par un injecteur de carburant (20) actionné par un électro-aimant.

10. Procédé selon l'une des revendications précédentes, comprenant en outre :
l'ajustement de la quantité pilote et/ou l'ajustement d'un instant d'alimentation de la quantité pilote en fonction d'une pression de suralimentation de l'air alimenté.

11. Procédé selon l'une des revendications précédentes, dans lequel :
une surface latérale interne de la préchambre (22) comprend un isolant thermique (40), de préférence sous la forme d'un revêtement thermiquement isolant.

12. Procédé selon l'une des revendications précédentes, dans lequel :
l'étape d'auto-allumage de la quantité pilote de carburant gazeux dans la préchambre (22) est réalisée pendant un fonctionnement normal du moteur à combustion interne (10) ; et
le procédé comprend en outre :
- l'allumage commandé de la quantité pilote dans la préchambre (22) par une bougie d'allumage lors d'un démarrage à froid du moteur à combustion interne (10) ; ou
- le préchauffage de la préchambre (22) par une bougie de préchauffage et l'auto-allumage de la quantité pilote de carburant gazeux dans la préchambre préchauffée (22) lors d'un démarrage à froid du moteur à combustion interne (10).

13. Procédé selon l'une des revendications précédentes, dans lequel :
l'alimentation en la quantité pilote et/ou l'alimentation en la quantité principale se fait sous forme gazeuse ; et/ou
l'alimentation en la quantité pilote et l'alimentation en la quantité principale sont réalisées par le même injecteur de carburant (20).

14. Procédé selon l'une des revendications précédentes, dans lequel :
la préchambre (22) présente un volume compris entre 0,5 cm³ et 2 cm³ ; et/ou
la préchambre (22) est reliée à la chambre de combustion principale (16) par plusieurs orifices de passage, de préférence 6 à 14 orifices de passage répartis ; et/ou la préchambre (22) est intégrée dans un injecteur de carburant (20) pour la quantité pilote et/ou la quantité principale, ou la préchambre (22) est réalisée séparément d'un injecteur de carburant (20) pour la quantité pilote et/ou la quantité principale.
